# EUROPÄISCHE PATENTSCHRIFT

(11) **EP 1 561 652 B1**
(45) Veröffentlichungstag und Bekanntmachung des Hinweises auf die Patenterteilung: **08.08.2007**
(21) Anmeldenummer: 05075256.7
(22) Anmeldetag: 01.02.2005
(51) Int. Cl.: B60R 22/34

(54) **Gurtvorrichtung**
Seat belt device
Dispositif de ceinture de sécurité

(30) Priorität: 04.02.2004 DE 102004006480
(43) Veröffentlichungstag der Anmeldung: 10.08.2005
(73) Patentinhaber: TAKATA - PETRI AG, 63743 Aschaffenburg (DE)
(72) Erfinder: Schrade, Wolfgang, 89134 Blaustein (DE)
(74) Vertreter: Baumgärtel, Gunnar

(56) Entgegenhaltungen:
- EP-A- 0 501 125
- US-A- 4 322 046
- US-B1- 6 237 869
- PATENT ABSTRACTS OF JAPAN Bd. 2000, Nr. 13, 5. Februar 2001 (2001-02-05) & JP 2000 289572 A (TOKAI RIKA CO LTD), 17. Oktober 2000 (2000-10-17)

## Beschreibung

Die Erfindung bezieht sich auf eine Gurtvorrichtung mit einer Gurtrolle zum Auf- und Abwickeln eines Gurtbandes und einer mit der Gurtrolle in Verbindung stehenden und gegenüber dem Fahrzeugchassis verriegelbaren Sperreinrichtung.

Eine derartige Gurtvorrichtung ist beispielsweise aus der US-Patentschrift 6,237,869 bekannt. Diese Gurtvorrichtung weist eine Gurtrolle und eine Sperreinrichtung auf, die über einen Torsionsstab miteinander in Verbindung stehen. Der Torsionsstab ist hierzu einerseits mit der Gurtrolle und andererseits mit der Sperreinrichtung gekoppelt.

Aus der deutschen Offenlegungsschrift DE 102 39 954 ist eine Gurtvorrichtung bekannt, bei der eine Gurtrolle und eine Sperreinrichtung über einen Torsionsstab miteinander in Verbindung stehen. Die Gurtvorrichtung weist zusätzlich eine Trennscheibe auf, mit der eine räumliche Trennung zwischen der Gurtrolle und der Sperreinrichtung erreicht wird.

Aus dem Abstract zur japanischen Anmeldung JP2000289572 ist eine Gurtvorrichtung bekannt, bei der die Gurtrolle und die Sperreinrichtung in axialer Richtung durch ein U-förmiges Element verbunden sind. Das U-förmige Element ist in die Gurtrolle eingepresst.

Das US-Patent 4,322,046 beschreibt eine Gurtvorrichtung entsprechend dem Oberbegriff des Anspruchs 1 mit einem Gurtaufroller und einer Sperreinrichtung. Der Gurtaufroller ist mit einer Verbindungseinrichtung fest verbunden. Die Verbindungseinrichtung weist ein Gewinde auf, durch welches sie mit der Sperrvorrichtung, die ein entsprechendes Gegengewinde aufweist, schraubbar verbunden ist.

Der Erfindung liegt die Aufgabe zugrunde, eine Gurtvorrichtung anzugeben, die besonders kostengünstig herstellbar ist. Insbesondere sollen die Komponenten der Gurtvorrichtung möglichst niedrige Toleranzanforderungen aufweisen.

Diese Aufgabe wird durch eine Gurtvorrichtung mit den Merkmalen des Anspruchs 1 gelöst. Vorteilhafte Ausgestaltungen der erfindungsgemäßen Gurtvorrichtung sind in **Unteransprüchen angegeben.**

Danach ist erfindungsgemäß vorgesehen, dass die Gurtrolle und die Sperreinrichtung in axialer Richtung durch eine Verbindungseinrichtung zusammengehalten werden, die einen ersten Anschlussbereich zur festen oder drehbaren Befestigung mit einer ersten Komponente und einen zweiten Anschlussbereich zur drehbaren Befestigung an einer zweiten Komponente aufweist. Die Verbindungseinrichtung ist gemäß einer ersten Variante der Erfindung mit der Gurtrolle als der ersten Komponente fest oder drehbar und mit der Sperreinrichtung als der zweiten Komponente drehbar verbunden; gemäß einer zweiten Variante der Erfindung ist vorgesehen, dass die Verbindungseinrichtung mit der Sperreinrichtung als der ersten Komponente fest oder drehbar und mit der Gurtrolle als der zweiten Komponente drehbar verbunden ist. Darüber hinaus ist erfindungsgemäß vorgesehen, dass die Verbindungseinrichtung im Bereich der Längsachse der Gurtrolle eine im Querschnitt im wesentlichen kreisförmige Ausnehmung aufweist und der innere Rand der Ausnehmung einen Wellensicherungsringbereich bildet, der dem zweiten Anschlussbereich zugeordnet ist.

Ein wesentlicher Vorteil der erfindungsgemäßen Gurtvorrichtung besteht darin, dass die Anordnung der Gurtrolle und der Sperreinrichtung in axialer Richtung durch eine entsprechende Dimensionierung der Verbindungseinrichtung eingestellt werden kann; die sich ergebenden Toleranzen für die axiale Verbindung zwischen der Gurtrolle und der Sperreinrichtung werden somit durch die Verbindungseinrichtung vorgegeben. Die übrigen Komponenten der Gurtvorrichtung, beispielsweise ein üblicherweise vorhandener Torsionsstab, haben auf die axiale Anordnung und die axiale Verbindung zwischen der Gurtrolle und der Sperreinrichtung keine Auswirkung, so dass etwaige Herstellungstoleranzen dieser Komponenten für die axiale Verbindung zwischen der Gurtrolle und der Sperreinrichtung keine Rolle spielen.

Ein weiterer wesentlicher Vorteil der erfindungsgemäßen Gurtvorrichtung besteht darin, dass sich eine Längenänderung eines Torsionsstabs im Falle einer Torsionsbewegung nicht auf die axiale Anordnung zwischen der Gurtrolle und der Sperreinrichtung auswirkt, weil deren Anordnung zueinander durch die Verbindungseinrichtung fest vorgegeben ist.

Ein dritter wesentlicher Vorteil der erfindungsgemäßen Gurtvorrichtung ist darin zu sehen, dass ein Torsionsstab bei der erfindungsgemäßen Gurtvorrichtung ausschließlich im Hinblick auf seine "Torsions-Rolle" optimiert zu werden braucht. Dies bedeutet, dass Herstellungstoleranzen des Torsionsstabs auch nur im Hinblick auf die Torsionsfunktion eingehalten werden müssen; die Toleranzen dürfen somit größer bemessen werden als dies bei den eingangs erwähnten vorbekannten Torsionsstäben mit "Doppelfunktion" - also Torsionsfunktion und Verbindungsfunktion - der Fall ist (vgl. US 6,237,869).

Ein vierter wesentlicher Vorteil der erfindungsgemäßen Gurtvorrichtung besteht darin, dass die Herstellungskosten beim Zusammensetzen der Gurtvorrichtung sehr gering sind. Im Unterschied beispielsweise zu der eingangs beschriebenen Gurtvorrichtung, bei der der Torsionsstab zum Verbinden der Gurtrolle und der Sperreinrichtung sowohl mit der Gurtrolle als auch mit der Sperreinrichtung durch Materialumformung verpresst wird, ist ein aufwändiges Verpressen des Torsionsstabes bei der erfindungsgemäßen Gurtvorrichtung aufgrund der separaten Verbindungseinrichtung nicht erforderlich. Die Herstellungskosten sind bei der erfindungsgemäßen Gurtvorrichtung somit deutlich geringer als bei den vorbekannten Gurtvorrichtungen mit "Torsionsstabs-Befestigung".

Ein fünfter wesentlicher Vorteil der erfindungsgemäßen Gurtvorrichtung ist darin zu sehen, dass der zweite Anschlussbereich einen Wellensicherungsringbereich umfasst; denn mit einem solchen Wellensicherungsringbereich lässt sich in einfacher und kostengünstiger Weise eine drehbare Befestigung zwischen der Verbindungseinrichtung und der Gurtrolle bzw. der Sperreinrichtung erreichen.

Vorzugsweise dient der erste Anschlussbereich zur drehfesten, insbesondere starren Befestigung mit der ersten Komponente. Alternativ können auch beide Anschlussbereiche eine drehbare Befestigung ermöglichen.

Wie bereits erwähnt, weisen Gurtvorrichtungen heutzutage üblicherweise einen Torsionsstab auf, der die auf den Fahrzeuginsassen wirkende Rückhaltekraft begrenzt, um Verletzungen durch den Sicherheitsgurt zu vermeiden. Es wird somit als vorteilhaft angesehen, wenn die Verbindungseinrichtung derart dimensioniert und angeordnet ist, dass die Gurtvorrichtung mit einem solchen Torsionsstab ausgestattet werden kann. Dies lässt sich einfach und damit vorteilhaft dadurch erreichen, dass die Ausnehmung im Bereich der Längsachse der Gurtrolle derart dimensioniert wird, dass ein Torsionsstab durch die Ausnehmung hindurchführbar ist und diese zur Kopplung der Gurtrolle und der Sperreinrichtung passieren kann.

Bevorzugt wird der Wellensicherungsringbereich der Verbindungseinrichtung auf einem Kragen der Gurtrolle bzw. der Sperreinrichtung gehalten. Zur axialen Sicherung des Wellensicherungsringbereichs weist der Kragen bevorzugt eine radial umlaufende Nut auf, in der der Wellensicherungsringbereich axial gesichert und drehbar gehalten ist.

Bevorzugt weist der Wellensicherungsringbereich einen Schlitz auf, um eine einfache Montage der Verbindungseinrichtung zu ermöglichen.

Besonders kostengünstig und damit vorteilhaft wird die Verbindungseinrichtung durch einen Wellensicherungsring, insbesondere ein Sicherungsblech, oder eine Hülse gebildet. Im Falle einer Hülse weist diese an ihrem inneren Rand vorzugsweise eine ringförmige Erhebung auf, die den Wellensicherungsringbereich bildet.

Der erste Anschlussbereich der Verbindungseinrichtung weist vorzugsweise eine Lasche oder einen Schnapphaken auf, die bzw. der in eine Laschen- oder Schnapphakenöffnung der Gurtrolle bzw. der Sperreinrichtung eingreift. Alternativ kann der erste Anschlussbereich auch zumindest eine Laschen- oder Schnapphakenöffnung aufweisen, in die eine "passende" Lasche oder ein "passender" Schnapphaken der Gurtrolle bzw. der Sperreinrichtung eingreifen kann.

Besonders kostengünstig lässt sich die Verbindungseinrichtung herstellen, wenn diese einstückig ausgebildet ist; die bedeutet, dass zumindest eine Lasche oder zumindest eine Schnapphaken einstückig angeformt ist oder zumindest eine Laschen- bzw. Schnapphakenöffnung vorhanden ist. Beispielsweise kann die Verbindungseinrichtung durch einen einstückigen Wellensicherungsring mit "Schnapphaken-Funktionalität" gebildet sein. Der einstückige Wellensicherungsring kann beispielsweise durch ein Sicherungsblech gebildet sein. Alternativ kann die Verbindungseinrichtung auch durch eine einstückige Hülse mit "Schnapphakenfunktionalität" gebildet sein.

Die Verbindungseinrichtung kann auch zwei- oder mehrteilig aufgebaut sein und einen Wellensicherungsring oder eine Hülse mit einer damit verbundenen Zusatzeinrichtung aufweisen; die Zusatzeinrichtung dient dann zur starren bzw. drehfesten Verbindung mit der ersten Komponente und weist hierfür vorzugsweise mindestens eine Lasche, mindestens einen Schnapphaken, mindestens eine Schnapphakenöffnung und/oder mindestens eine Laschenöffnung auf.

Vorzugsweise erstrecken sich die Laschen und/oder Schnapphaken in Längsrichtung der Gurtrolle und greifen in Laschen- oder Schnapphakenöffnungen ein, die sich ebenfalls entlang der Längsachse der Gurtrolle erstrecken.

Vorzugsweise sind an dem ersten Anschlussbereich der Verbindungseinrichtung eine Mehrzahl an Laschen, Schnapphaken, Schnapphakenöffnungen oder Laschenöffnungen angeordnet, um eine besonders feste Verbindung zu erreichen. Die Anordnung der Mehrzahl der Laschen, Schnapphaken, Schnapphakenöffnungen oder Laschenöffnungen ist bevorzugt in radialer Richtung symmetrisch.

Die Anordnung zwischen der Gurtrolle der Verbindungseinrichtung und der Sperreinrichtung ist vorzugsweise derart gewählt, dass die Gurtvorrichtung nach einer Montage der Komponenten unter einer Vorspannung steht, die bei der Montage erzeugt wird. Eine Vorspannung bietet den Vorteil, dass die miteinander verbundenen Teile beim Betrieb - beispielsweise auf unebenen Straßen - aufgrund ihrer "Spielfreiheit" nicht klappern können.

Im Übrigen wird es als vorteilhaft angesehen, wenn der Abstand zwischen der Gurtrolle und der Sperreinrichtung größer als die Länge des Torsionsstabs ist, damit zusätzlicher Platz für eine Längenänderung des Torsionsstabes im Falle eines Tordierens des Torsionsstabes vorhanden ist.

Vorzugsweise wird die Lage der Schnapphaken relativ zueinander, insbesondere gegen ein Aufbiegen, gesichert. Dies kann besonders einfach und damit vorteilhaft durch eine Gurtplatte erfolgen, die auf der Gurtrolle befestigt wird und zur Gurtbandbefestigung dient. Bevorzugt deckt die Gurtplatte einen Schlitz im Sicherungsringbereich ab.

Besonders einfach und damit kostengünstig kann die Verbindungseinrichtung durch ein einfaches Sicherungsblech gebildet sein, das einerseits auf der Sperrvorrichtung radial beweglich und axial gesichert gehalten wird und andererseits in die Gurtrolle eingeklippt bzw. an dieser angeklemmt ist.

Zur Erläuterung der Erfindung zeigen
- Figur 1: ein erstes Ausführungsbeispiel für eine erfindungsgemäße Gurtvorrichtung und
- Figuren 2-7: ein zweites Ausführungsbeispiel für eine erfindungsgemäße Gurtvorrichtung.

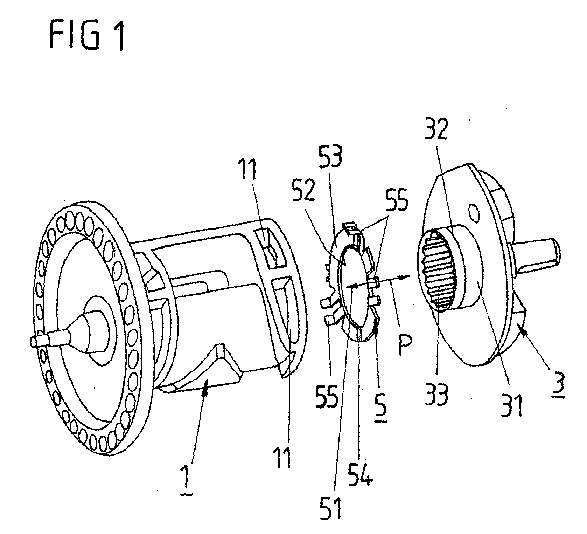

In den Figuren 1 bis 6 werden für identische Komponenten bzw. für vergleichbare Komponenten der Übersichtlichkeit halber dieselben Bezugszeichen verwendet.

Man erkennt in der Figur 1 eine Gurtrolle 1 zum Auf- und Abwickeln eines in der Figur 1 nicht dargestellten Gurtbandes. Außerdem erkennt man eine Sperreinrichtung 3, mit der die Gurtrolle 1 gegenüber dem Fahrzeugchassis verriegelbar ist. Die Sperreinrichtung 3 ist mit der Gurtrolle 1 mittels einer einstückig ausgebildeten Verbindungseinrichtung 5 verbunden. Bei der Verbindungseinrichtung handelt es sich um einen Wellensicherungsring, der beispielsweise durch ein Sicherungsblech gebildet ist,

Die Verbindungseinrichtung 5 weist eine kreisförmige Ausnehmung 51 auf, durch die ein kreisförmiger innerer Rand 52 gebildet wird. Durch den inneren Rand 52 wird wiederum ein Wellensicherungsringbereich 53 mit einem Schlitz 54 gebildet. Der Schlitz 54 hat die Funktion, den Wellensicherungsringbereich 53 mit seinem kreisförmigen Rand 52 auf einen Kragen 31 der Sperreinrichtung 3 aufschieben zu können. Dabei wird der Wellensicherungsringbereich 53 geringfügig auseinandergedrückt. Zum Arretieren der Verbindungseinrichtung 5 auf dem Kragen 31 der Sperreinrichtung 3 weist die Sperreinrichtung 3 eine Nut 32 auf, in die die Verbindungseinrichtung 5 "eingeschnappt" wird. Der Wellensicherungsringbereich 53 bzw. die Verbindungseinrichtung 5 sind damit in axialer Richtung - dargestellt durch einen Pfeil P - auf dem Kragen 31 gesichert; ein Drehen der Verbindungseinrichtung 5 auf dem Kragen 31 bleibt jedoch möglich, da es sich bei der Verbindung zwischen der Verbindungseinrichtung 5 und dem Kragen 31 um eine drehbare und formschlüssige Verbindung handelt.

Die Verbindungseinrichtung 5 weist darüber hinaus Schnapphaken 55 auf, die in Schnapphakenöffnungen 11 der Gurtrolle 1 eingeschnappt werden. Damit wird eine formschlüssige und feste bzw. starre, nicht drehbare Verbindung zwischen der Verbindungseinrichtung 5 und der Gurtrolle 1 erreicht. Die Verbindungseinrichtung 5 ist somit gegenüber der Gurtrolle 1 axial (entlang der Längsrichtung der Gurtrolle 1 bzw. entlang der Pfeilrichtung P) gesichert und in radialer Richtung bezüglich der Längsachse der Gurtrolle 1 fixiert.

Zu der Gurtvorrichtung gemäß der Figur 1 gehört ebenfalls ein in der Figur 1 nicht dargestellter Torsionsstab, der in einen Aufnahmebereich 33 der Sperreinrichtung 3 eingesetzt werden kann. In entsprechender Weise wird der Torsionsstab mit der Gurtrolle 1 befestigt.

Die Gurtvorrichtung gemäß der Figur 1 ist dabei derart ausgestaltet, dass die Gurtrolle 1 und die Sperreinrichtung 3 nach ihrer Verbindung mit der Verbindungseinrichtung einen derartigen Abstand zueinander aufweisen, dass der Torsionsstab ein wenig Spiel entlang der Längsachse P der Gurtrolle 1 aufweist. Dadurch wird gewährleistet, dass im Falle eines Fahrzeugunfalls und damit im Falle eines Tordierens des Torsionsstabs eine Längenänderung des Torsionsstabs möglich ist, ohne dass dadurch die Gurtrolle 1 und die Sperreinrichtung 3 "auseinandergedrückt" oder verspannt werden. Die Sperreinrichtung 3 und die Gurtrolle 1 bleiben somit in axialer Richtung zueinander unverändert fixiert.

Die Lage der Nut 32 auf dem Kragen 31 der Sperreinrichtung 3 ist vorzugsweise derart gewählt, dass bei einem Zusammensetzen der Gurtvorrichtung bzw. bei einem Zusammensetzen der Gurtrolle 1, der Sperreinrichtung 3 und der Verbindungseinrichtung 5 eine Vorspannung erzeugt wird, durch die die Sperreinrichtung 3 fest auf die Gurtrolle 1 gedrückt wird. Durch diese Vorspannung wird ein Klappern der Gurtvorrichtung beispielsweise bei Fahrzeugschwingungen vermieden.

Anstelle der in der Figur 1 dargestellten Schnapphaken 55 und Schnapphakenöffnungen 11 können an der Verbindungseinrichtung 5 auch Laschen angeordnet sein, die in Laschenöffnungen der Gurtrolle eingesteckt und durch Umbiegen fixiert werden. Darüber hinaus ist selbstverständlich auch eine inverse Anordnung der Schnapphaken bzw. Schnapphakenöffnungen oder Laschen und Laschenöffnungen möglich; dies bedeutet, dass an der Verbindungseinrichtung 5 Laschenöffnungen bzw. Schnapphakenöffnungen vorhanden sein können, in die Schnapphaken bzw. Laschen der Gurtrolle eingreifen.

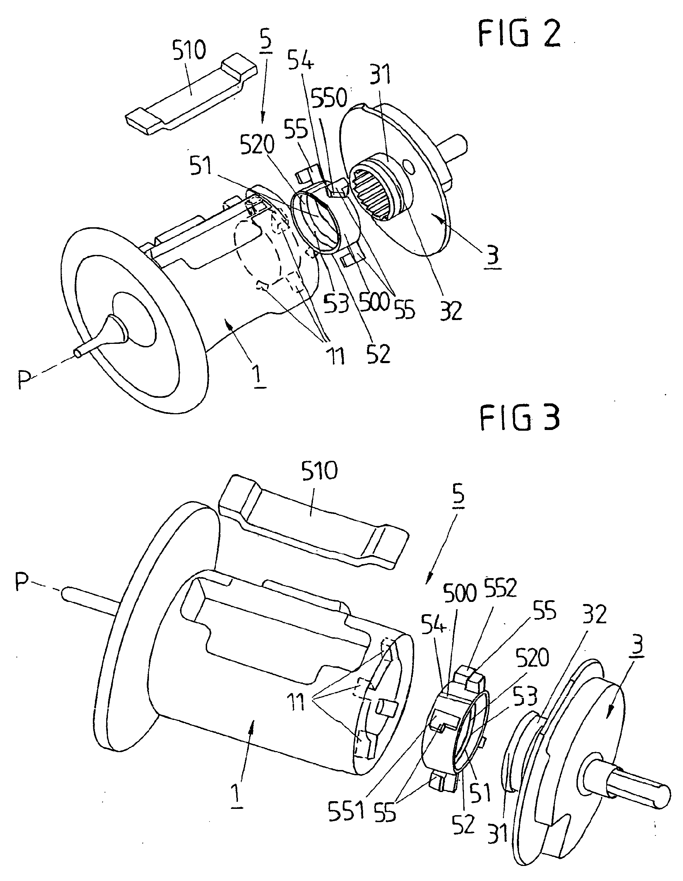

In den Figuren 2 bis 7 ist ein zweites Ausführungsbeispiel einer Gurtvorrichtung dargestellt, dabei zeigen die Figuren 2 bis 4 die Gurtvorrichtung in drei verschiedenen dreidimensionalen Ansichten.

Man erkennt in den Figuren 2 bis 4 eine Gurtrolle 1, die mittels einer Verbindungseinrichtung 5 mit einer Sperreinrichtung 3 verbunden ist. Die Verbindungseinrichtung 5 wird durch eine Kunststoff-Hülse 500 gebildet, der eine Gurtplatte 510 zugeordnet ist. Die Hülse 500 weist eine Ausnehmung 51 mit einem inneren kreisförmigen Rand 52 auf. Im Mittenbereich des inneren kreisförmigen Randes 52 ist eine ringförmige Erhebung 520 erkennbar, die einen Wellensicherungsbereich 53 bildet. Der Wellensicherungsbereich 53 wird in eine Nut 32 eines Kragens 31 der Sperreinrichtung 3 aufgeschnappt. Hierzu wird der Wellensicherungsringbereich 53 geringfügig auseinandergedrückt, was durch einen Schlitz 54 in der Hülse 500 ermöglicht wird. Die Hülse 500 ist somit drehbar und formschlüssig auf dem Kragen 31 der Sperreinrichtung 3 befestigt.

Die Hülse 500 weist darüber hinaus Schnapphaken 55 auf, die sich entlang der Längsrichtung P der Gurtrolle 1 erstrecken. Die Schnapphaken 55 greifen in Schnapphakenöffnungen 11 der Gurtrolle 1 ein, und zwar in paralleler Richtung zur Längsrichtung P der Gurtrolle 1.

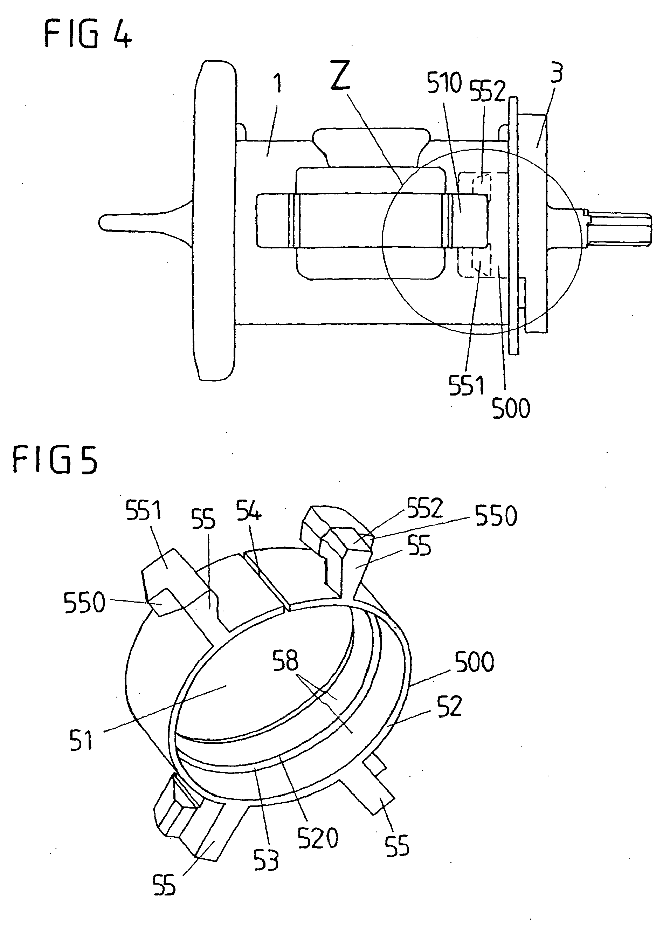

Die Schnapphaken 55 weisen Schrägen 550 auf, die schräg zur Achse der Gurtrolle 1 verlaufen, also nicht senkrecht zur Achse der Gurtrolle 1 - dies zeigen die Figuren 4, 5 und 7 im Detail. Die Schrägen 550 führen zu einer kraftschlüssigen Verbindung mit der Gurtrolle 1. Die Schrägen 550 dienen dazu, Toleranzen in axialer Richtung auszugleichen; denn durch die Schrägen 550 wird stets ein fester Sitz der Schnapphaken 55 in der Gurtrolle 1 sichergestellt. Je nach Toleranzsituation kann es vorkommen, dass die Schrägen 550 zunächst ein vollständiges Einrasten der Schnapphaken 55 verhindern; durch Montage bzw. Eindrücken der Gurtplatte 510 werden jedoch die Schnapphaken 55 vollständig in Position gebracht, wobei eine geringfügige Verformung der Schnapphaken 55 erfolgt. Auf diese Weise wird ein spielfreier Zusammenbau erreicht.

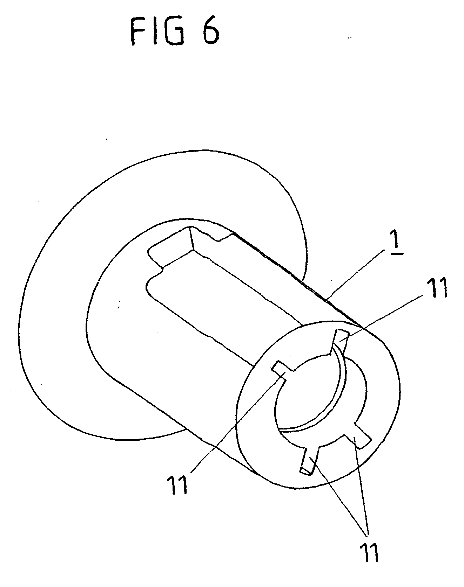

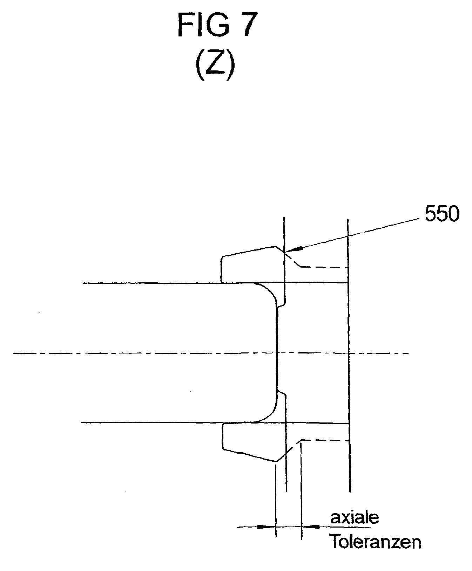

Die Schnapphaken 55 mit den Schrägen 550 sowie die Hülse 500 sind im Detail nochmals in den Figuren 5 und 7 gezeigt.

Sobald die Hülse 500 auf dem Kragen 31 der Sperreinrichtung 3 montiert ist, liegt die ringförmige Erhebung 520 in der Nut 32 der Sperreinrichtung 3. Der übrige Bereich 58 des Innenrands der Ausnehmung 51 liegt auf dem übrigen Bereich des Kragens 31 auf, so dass ein Verkippen und "Wackeln" der Hülse 500 auf dem Kragen 31 verhindert wird.

Nach der Montage der Hülse 500 auf dem Kragen 31 werden die Schnapphaken 55 der Hülse 500 in die Schnapphakenöffnungen 11 der Gurtrolle 1 eingeschnappt. Dadurch ist eine axiale Fixierung bzw. Befestigung zwischen der Sperreinrichtung 3 und der Gurtrolle 1 erreicht, wobei jedoch eine Drehbewegung zwischen der Sperreinrichtung 3 und der Gurtrolle 1 möglich bleibt, weil sich nämlich die ringförmige Erhebung 510 der Hülse 500 in der Nut 32 des Kragens 31 drehen kann.

Um ein Auseinanderbiegen der beiden unmittelbar benachbart zu dem Schlitz 54 angeordneten Schnapphaken 551 und 552 zu verhindern, werden die beiden Schnapphaken 551 und 552 gesichert. Dies geschieht, indem die Gurtplatte 510 zwischen die beiden Schnapphaken 551 und 552 der Hülse 500 eingesetzt wird. Die Gurtplatte 510 deckt somit den Schlitz 54 der Hülse 500 ab. Die Funktion der Gurtplatte 510 dient darüber hinaus zur Gurtbandbefestigung, nachdem ein in den Figuren nicht dargestelltes Gurtband an der Gurtrolle 1 befestigt wurde.

In der Figur 4 ist die montierte Gurtvorrichtung im Detail gezeigt. Man erkennt, wie die Gurtplatte 510 zwischen den beiden Schnapphaken 551 und 552 angeordnet ist und den Schlitz 54 der Hülse 500 abdeckt.

In der Figur 6 ist die Gurtrolle 1 allein gezeigt. Man erkennt die Schnapphakenöffnungen 11, in die die Schnapphaken 55 der Hülse 500 zur Montage eingeschnappt werden.

In der Gurtvorrichtung gemäß den Figuren 2 bis 6 kann darüber hinaus ein Torsionsstab vorgesehen sein. Dies ist in den Figuren 2 bis 6 aus Gründen der Übersichtlichkeit nicht dargestellt. Im Übrigen wird auf die obigen Ausführungen im Zusammenhang mit dem Ausführungsbeispiel gemäß der Figur 1 verwiesen.

### Bezugszeichenliste

- 1: Gurtrolle
- 3: Sperreinrichtung
- 5: Verbindungseinrichtung
- 11: Schnapphakenöffnungen
- 31: Kragen
- 32: Nut
- 33: Aufnahmebereich für Torsionsstab
- 51: Ausnehmung
- 52: Kreisförmiger Rand
- 53: Wellensicherungsbereich als zweiter Anschlussbereich
- 54: Schlitz
- 55: Schnapphaken als erster Anschlussbereich
- 58: übriger Bereich des Innenrands
- 500: Hülse
- 510: Gurtplatte
- 520: Ringförmige Erhebung
- 551: Schnapphaken
- 552: Schnapphaken
- 550: Schrägen
- P: Längsrichtung der Gurtrolle

## Patentansprüche

1. Gurtvorrichtung mit einer Gurtrolle (1) zum Auf- und Abwickeln eines Gurtbandes und einer mit der Gurtrolle (1) in Verbindung stehenden und gegenüber dem Fahrzeugchassis verriegelbaren Sperreinrichtung (3), wobei die Gurtrolle (1) und die Sperreinrichtung (3) in axialer Richtung (P) durch eine Verbindungseinrichtung (5) zusammengehalten werden, die einen ersten Anschlussbereich (55) zur festen oder drehbaren Befestigung mit einer ersten Komponente und einen zweiten Anschlussbereich (53) zur drehbaren Befestigung an einer zweiten Komponente aufweist,
- wobei die Verbindungseinrichtung (5)
- mit der Gurtrolle (1) als der ersten Komponente fest oder drehbar und mit der Sperreinrichtung (3) als der zweiten Komponente drehbar verbunden ist oder
- mit der Sperreinrichtung als der ersten Komponente fest oder drehbar und mit der Gurtrolle als der zweiten Komponente drehbar verbunden ist,
- wobei die Verbindungseinrichtung (5) im Bereich der Längsachse (P) der Gurtrolle (1) eine im Querschnitt im wesentlichen kreisförmige Ausnehmung (51) aufweist, **dadurch gekennzeichnet, dass**
zumindest ein Teil des inneren Randes (52) der Ausnehmung (51) einen Wellensicherungsringbereich (53) bildet, der dem zweiten Anschlussbereich zugeordnet ist.

2. Gurtvorrichtung nach Anspruch 1, **dadurch gekennzeichnet, dass** der Wellensicherungsringbereich (53) so auf einem Kragen (31) der zweiten Komponente (3) eingeschnappt ist und gehalten wird, dass die Verbindungseinrichtung (5) auf dem Kragen (31) in axialer Richtung (P) gesichert ist.

3. Gurtvorrichtung nach Anspruch 1 oder 2, **dadurch gekennzeichnet, dass** der erste Anschlussbereich (55) zur drehfesten, insbesondere starren Befestigung mit der ersten Komponente dient.

4. Gurtvorrichtung nach einem der vorangehenden Ansprüche **dadurch gekennzeichnet, dass** die Ausnehmung (51) derart dimensioniert ist, dass ein Torsionsstab hindurchführbar ist.

5. Gurtvorrichtung nach Anspruch 4, **dadurch gekennzeichnet, dass** die Gurtvorrichtung einen Torsionsstab aufweist, der die Ausnehmung (55) passiert.

6. Gurtvorrichtung nach Anspruch 5, **dadurch gekennzeichnet, dass** der Kragen (31) eine radial umlaufende Nut (32) aufweist, in der der Wellensicherungsringbereich (53) axial gesichert und drehbar gehalten ist.

7. Gurtvorrichtung nach einem der vorangehenden Ansprüche, **dadurch gekennzeichnet, dass** der Wellensicherungsringbereich (53) einen Schlitz (54) aufweist.

8. Gurtvorrichtung nach einem der vorangehenden Ansprüche, **dadurch gekennzeichnet, dass** die Verbindungseinrichtung (5) durch einen Wellensicherungsring, insbesondere durch ein Sicherungsblech, oder eine Hülse (500) gebildet ist.

9. Gurtvorrichtung nach einem der vorangehenden Ansprüche 1 bis 7, **dadurch gekennzeichnet, dass** die Verbindungseinrichtung (5) durch eine Hülse (500) gebildet ist und die Hülse (500) an ihrem inneren Rand (52) eine ringförmige Erhebung (510) aufweist, die den Wellensicherungsringbereich (53) bildet.

10. Gurtvorrichtung nach einem der vorangehenden Ansprüche, **dadurch gekennzeichnet, dass** der erste Anschlussbereich zumindest eine Lasche oder zumindest einen Schnapphaken (55) aufweist, die bzw. der in eine Schnapphaken-oder Laschenöffnung (11) der Gurtrolle (1) bzw. der Sperreinrichtung eingreift.

11. Gurtvorrichtung nach einem der vorangehenden Ansprüche, **dadurch gekennzeichnet, dass** der erste Anschlussbereich zumindest eine Laschen- oder Schnapphakenöffnung aufweist, in die eine Lasche oder ein Schnapphaken der Gurtrolle bzw. der Sperreinrichtung eingreift.

12. Gurtvorrichtung nach einem der vorangehenden Ansprüche 10 oder 11, **dadurch gekennzeichnet, dass** die Verbindungseinrichtung (5) durch einen Wellensicherungsring oder eine Hülse (500) gebildet ist, an dem bzw. an der die zumindest eine Lasche oder der zumindest eine Schnapphaken (51) einstückig angeformt ist oder an dem bzw. an der die zumindest eine Schnapphaken- oder Laschenöffnung angeordnet ist.

13. Gurtvorrichtung nach einem der vorangehenden Ansprüche 1 bis 12, **dadurch gekennzeichnet, dass** die Verbindungseinrichtung zumindest zweiteilig aufgebaut ist und einen Wellensicherungsring oder Hülse und eine damit verbundene Zusatzeinrichtung aufweist, an der die mindestens eine Lasche, der mindestens eine Schnapphaken, die mindestens eine Schnapphakenöffnung und/oder die mindestens eine Laschenöffnung ausgebildet sind.

14. Gurtvorrichtung nach einem der vorangehenden Ansprüche 10 bis 13, **dadurch gekennzeichnet, dass** sich die Laschen und/oder die Schnapphaken parallel zur Längsachse (P) der Gurtrolle (1) erstrecken und in Laschen- oder Schnapphakenöffnungen eingreifen, die sich ebenfalls parallel zur Längsachse (P) der Gurtrolle (1) erstrecken.

15. Gurtvorrichtung nach einem der vorangehenden Ansprüche 10 bis 14, **dadurch gekennzeichnet, dass** der erste Anschlussbereich eine Mehrzahl an Laschen, Schnapphaken (55), Schnapphakenöffnungen oder Laschenöffnungen aufweist, die vorzugsweise in radialer Richtung symmetrisch angeordnet sind.

16. Gurtvorrichtung nach einem der vorangehenden Ansprüche, **dadurch gekennzeichnet, dass** die Gurtrolle (1), die Verbindungseinrichtung (5) und die Sperreinrichtung (3) unter einer Vorspannung stehen.

17. Gurtvorrichtung nach einem der vorangehenden Ansprüche, **dadurch gekennzeichnet, dass** der Abstand zwischen der Gurtrolle (1) und der Sperreinrichtung (3) größer als die Länge eines in der Gurtvorrichtung vorhandenen Torsionsstabs ist.

18. Gurtvorrichtung nach einem der vorangehenden Ansprüche 10 bis 17, **dadurch gekennzeichnet, dass** die Lage der Schnapphaken (551, 552) relativ zueinander , insbesondere gegen ein Aufbiegen, gesichert ist.

19. Gurtvorrichtung nach Anspruch 18, **dadurch gekennzeichnet, dass** die Sicherung der relativen Lage der Schnapphaken (551, 552) zueinander durch eine Gurtplatte (510) der Gurtrolle (1) gesichert ist, wobei die Gurtplatte (510) außerdem zur Gurtbandbefestigung dient.

## Claims

1. Seat belt device with a seat belt roller (1) for winding up and unwinding a seat belt strap, and with a locking mechanism (3) which is connected to the seat belt roller (1) and can be locked in relation to the vehicle chassis, the seat belt roller (1) and the locking mechanism (3) being held together in the axial direction (P) by a connecting mechanism (5) which has a first joining region (55) for the fixed or rotatable fastening to a first component and a second joining region (53) for the rotatable fastening to a second component,
- the connecting mechanism (5)
- being connected fixedly or rotatably to the seat belt roller (1) as the first component and being connected rotatably to the locking mechanism (3) as the second component, or
- being connected fixedly or rotatably to the locking mechanism as the first component and being connected rotatably to the seat belt roller as the second component,
- the connecting mechanism (5) having a recess (51), which is essentially circular in cross-section, in the region of the longitudinal axis (P) of the seat belt roller (1), **characterized in that**
- at least part of the inner edge (52) of the recess (51) forms a shaft securing ring region (53) which is assigned to the second joining region.

2. Seat belt device according to Claim 1, **characterized in that** the shaft securing ring region (53) is snapped into place and held on a collar (31) of the second component (3) in such a manner that the connecting mechanism (5) is secured on the collar (31) in the axial direction (P).

3. Seat belt device according to Claim 1 or 2, **characterized in that** the first joining region (55) serves for the rotationally fixed, in particular rigid fastening to the first component.

4. Seat belt device according to one of the preceding claims, **characterized in that** the recess (51) is dimensioned in such a manner that a torsion bar can be guided through it.

5. Seat belt device according to Claim 4, **characterized in that** the seat belt device has a torsion bar which passes through the recess (55).

6. Seat belt device according to Claim 5, **characterized in that** the collar (31) has a radially encircling groove (32) in which the shaft securing ring region (53) is secured axially and is held rotatably.

7. Seat belt device according to one of the preceding claims, **characterized in that** the shaft securing ring region (53) has a slot (54).

8. Seat belt device according to one of the preceding claims, **characterized in that** the connecting mechanism (5) is formed by a shaft securing ring, in particular by a securing plate, or a sleeve (500).

9. Seat belt device according to one of the preceding Claims 1 to 7, **characterized in that** the connecting mechanism (5) is formed by a sleeve (500), and the sleeve (500) has, on its inner edge (52), an annular elevation (510) which forms the shaft securing ring region (53).

10. Seat belt device according to one of the preceding claims, **characterized in that** the first joining region has at least one tab or at least one snap-in hook (55) which engages in a snap-in hook opening or tab opening (11) of the seat belt roller (1) or of the locking mechanism.

11. Seat belt device according to one of the preceding claims, **characterized in that** the first joining region has at least one tab opening or snap-in hook opening in which a tab or a snap-in hook of the seat belt roller or of the locking mechanism engages.

12. Seat belt device according to either of the preceding Claims 10 and 11, **characterized in that** the connecting mechanism (5) is formed by a shaft securing ring or a sleeve (500) on which the at least one tab or the at least one snap-in hook (51) is formed as a single piece or on which the at least one snap-in hook opening or tab opening is arranged.

13. Seat belt device according to one of the preceding Claims 1 to 12, **characterized in that** the connecting mechanism is constructed in at least two parts and has a shaft securing ring or sleeve and an additional mechanism which is connected thereto and on which the at least one tab, the at least one snap-in hook, the at least one snap-in hook opening and/or the at least one tab opening are formed.

14. Seat belt device according to one of the preceding Claims 10 to 13, **characterized in that** the tabs and/or the snap-in hooks extend parallel to the longitudinal axis (P) of the seat belt roller (1) and engage in tab openings or snap-in hook openings which likewise extend parallel to the longitudinal axis (P) of the seat belt roller (1).

15. Seat belt device according to one of the preceding Claims 10 to 14, **characterized in that** the first connecting region has a plurality of tabs, snap-in hooks (55), snap-in hook openings or tab openings which are preferably arranged symmetrically in the radial direction.

16. Seat belt device according to one of the preceding claims, **characterized in that** the seat belt roller (1), the connecting mechanism (5) and the locking mechanism (3) are under pre-stress.

17. Seat belt device according to one of the preceding claims, **characterized in that** the distance between the seat belt roller (1) and the locking mechanism (3) is greater than the length of a torsion bar present in the seat belt device.

18. Seat belt device according to one of the preceding Claims 10 to 17, **characterized in that** the position of the snap-in hooks (551, 552) relative to each other is secured, in particular against bending open.

19. Seat belt device according to Claim 18, **characterized in that** the securing of the relative position of the snap-in hooks (551, 552) with respect to each other is secured by a seat belt plate (510) of the seat belt roller (1), the seat belt plate (510) also serving to fasten the seat belt strap.

## Revendications

1. Dispositif de ceinture de sécurité muni d'un enrouleur de ceinture (1) pour enrouler et dérouler une sangle, et d'un dispositif de blocage (3) en liaison avec l'enrouleur de ceinture (1) et pouvant être verrouillé par rapport au châssis du véhicule, l'enrouleur de ceinture (1) et le dispositif de blocage (3) étant maintenus ensemble dans le sens axial (P) par l'intermédiaire d'un dispositif de liaison (5) qui comporte une première zone de raccordement (55) destinée à la fixation fixe ou rotative avec un premier composant et une seconde zone de raccordement (53) destinée à la fixation rotative au niveau d'un second composant,
- le dispositif de liaison (5)
- étant relié de façon fixe ou rotative à l'enrouleur de ceinture (1) en tant que premier composant, et de façon rotative au dispositif de blocage (3) en tant que second composant ou
- étant relié de façon fixe ou rotative au dispositif de blocage en tant que premier composant, et de façon rotative à l'enrouleur de ceinture en tant que second composant,
- le dispositif de liaison (5) comportant dans la zone de l'axe longitudinal (P) de l'enrouleur de ceinture (1) un évidement (51) essentiellement circulaire en coupe, **caractérisé en ce qu'**au moins une partie du bord intérieur (52) de l'évidement (51) forme une zone de circlip d'arbre (53), laquelle est attribuée à la seconde zone de raccordement.

2. Dispositif de ceinture de sécurité selon la revendication 1, **caractérisé en ce que** la zone de circlip d'arbre (53) est encliquetée et maintenue de telle façon sur un collet (31) du second composant (3) que le dispositif de liaison (5) est bloqué sur le collet (31) dans le sens axial (P).

3. Dispositif de ceinture de sécurité selon la revendication 1 ou 2, **caractérisé en ce que** la première zone de raccordement (55) sert à la fixation bloquée en rotation, en particulier rigide, avec le premier composant.

4. Dispositif de ceinture de sécurité selon l'une quelconque des revendications précédentes, **caractérisé en ce que** l'évidement (51) est dimensionné de telle façon qu'une barre de torsion peut passer à travers ledit évidement.

5. Dispositif de ceinture de sécurité selon la revendication 4, **caractérisé en ce que** le dispositif de ceinture de sécurité comporte une barre de torsion qui passe à travers l'évidement (51).

6. Dispositif de ceinture de sécurité selon la revendication 5, **caractérisé en ce que** le collet (31) comporte une rainure (32) circulaire radialement, dans laquelle la zone de circlip d'arbre (53) est bloquée axialement et maintenue de façon rotative.

7. Dispositif de ceinture de sécurité selon l'une quelconque des revendications précédentes, **caractérisé en ce que** la zone de circlip d'arbre (53) comporte une fente (54).

8. Dispositif de ceinture de sécurité selon l'une quelconque des revendications précédentes, **caractérisé en ce que** le dispositif de liaison (5) est formé d'un circlip d'arbre, en particulier d'une rondelle de blocage, ou d'un manchon (500).

9. Dispositif de ceinture de sécurité selon l'une quelconque des revendications précédentes 1 à 7, **caractérisé en ce que** le dispositif de liaison (5) est formé d'un manchon (500) et le manchon (500) comporte sur son bord intérieur (52) une élévation (510) annulaire qui forme la zone de circlip d'arbre (53).

10. Dispositif de ceinture de sécurité selon l'une quelconque des revendications précédentes, **caractérisé en ce que** la première zone de raccordement comporte au moins une patte ou au moins un crochet encliquetable (55), laquelle et/ou lequel engrène dans une ouverture (11) pour patte ou pour crochet encliquetable de l'enrouleur de ceinture (1) et/ou du dispositif de blocage.

11. Dispositif de ceinture de sécurité selon l'une quelconque des revendications précédentes, **caractérisé en ce que** la première zone de raccordement comporte au moins une ouverture pour patte ou pour crochet encliquetable, dans laquelle engrène une patte ou un crochet encliquetable de l'enrouleur de ceinture et/ou du dispositif de blocage.

12. Dispositif de ceinture de sécurité selon l'une des revendications précédentes 10 ou 11, **caractérisé en ce que** le dispositif de liaison (5) est formé d'un circlip d'arbre ou d'un manchon (500), sur lequel est formé d'une seule pièce le crochet encliquetable (51) au moins au nombre de un ou la patte au moins au nombre de un, ou sur lequel est disposée l'ouverture au moins au nombre de un pour crochet encliquetable ou pour patte.

13. Dispositif de ceinture de sécurité selon l'une quelconque des revendications précédentes 1 à 12, **caractérisé en ce que** le dispositif de liaison est conçu au moins en deux parties et comporte un circlip d'arbre ou manchon et un dispositif supplémentaire relié à cela, sur lequel sont formés la patte au moins au nombre de un, le crochet encliquetable au moins au nombre de un, l'ouverture au moins au nombre de un pour crochet encliquetable et/ou l'ouverture, au moins au nombre de un, pour patte.

14. Dispositif de ceinture de sécurité selon l'une quelconque des revendications précédentes 10 à 13, **caractérisé en ce que** les pattes et/ou les crochets encliquetables s'étendent parallèlement à l'axe longitudinal (P) de l'enrouleur de ceinture (1) et engrènent dans des ouvertures pour patte ou pour crochet encliquetable, lesquelles s'étendent également parallèlement à l'axe longitudinal (P) de l'enrouleur de ceinture (1).

15. Dispositif de ceinture de sécurité selon l'une quelconque des revendications précédentes 10 à 14, **caractérisé en ce que** la première zone de raccordement comporte une pluralité de pattes, de crochets encliquetables (55), d'ouvertures pour crochet encliquetable ou d'ouvertures pour patte, qui sont disposés de façon symétrique de préférence dans le sens radial.

16. Dispositif de ceinture de sécurité selon l'une quelconque des revendications précédentes, **caractérisé en ce que** l'enrouleur de ceinture (1), le dispositif de liaison (5) et le dispositif de blocage (3) sont précontraints.

17. Dispositif de ceinture de sécurité selon l'une quelconque des revendications précédentes, **caractérisé en ce que** la distance entre l'enrouleur de ceinture (1) et le dispositif de blocage (3) est supérieure à la longueur d'une barre de torsion présente dans le dispositif de ceinture de sécurité.

18. Dispositif de ceinture de sécurité selon l'une quelconque des revendications précédentes 10 à 17, **caractérisé en ce que** la position des crochets encliquetables (551, 552) les uns par rapport aux autres est protégée en particulier de tout gauchissement.

19. Dispositif de ceinture de sécurité selon la revendication 18, **caractérisé en ce que** le blocage de la position relative des crochets encliquetables (551, 552) les uns par rapport aux autres est assuré par une plaque de ceinture (510) de l'enrouleur de ceinture (1), la plaque de ceinture (510) servant en outre à fixer la sangle.
